Europäisches Patentamt

European Patent Office

Office européen des brevets

(11) Publication number: **0 349 166**
**A2**

## (12) EUROPEAN PATENT APPLICATION

(21) Application number: **89306100.2**

(22) Date of filing: **15.06.89**

(51) Int. Cl.4: **G21D 3/00 , G21C 17/00**

(30) Priority: **29.06.88 US 213057**

(43) Date of publication of application:
**03.01.90 Bulletin 90/01**

(84) Designated Contracting States:
**BE ES FR GB IT SE**

(71) Applicant: **WESTINGHOUSE ELECTRIC CORPORATION**
**Westinghouse Building Gateway Center**
**Pittsburgh Pennsylvania 15222(US)**

(72) Inventor: **Impink, Albert Joseph, Jr.**
**18 Bel Aire Road**
**Delmont, PA 15626(US)**
Inventor: **Lipner, Melvin Herbert**
**1352 Foxboro Drive**
**Monroeville, PA 15146(US)**

(74) Representative: **van Berlyn, Ronald Gilbert**
**23, Centre Heights**
**London, NW3 6JG(GB)**

(54) A system and method for monitoring procedure execution.

(57) This invention is a system that provides spatially dependent, electromagnetic type diagnostic information to a computer based procedures execution monitoring and guidance system. The computer based procedures execution and monitoring system 22 and 24 automatically selects procedures for performance by a human operator 26 based on the diagnostic information. A spectral analyzer 16 obtains spectra from fluid sources which are used by a computer 22 to determine whether to trigger a procedure to correct any abberations discovered by comparing the spectra to known reference spectra. A pyrometer 14 monitors process temperature as compared to various thresholds and the computer 22 triggers a procedure if the temperature is not normal. An image processing system 30 and 32 monitors status lights, meters, valve positions and other visual information from status displays 20. The signature features from the image processing computer 30 are compared to reference features to determine whether a procedure should be triggered. When a procedure is triggered, the operator 26 monitors and follows the procedure to change the state of the plant 10. The optical interfaces are used by the procedure computer 22 to monitor the changes in the plant condition calling up other procedures or changing the displayed procedures as needed and confirming plant 10 response to operator control actions. This feedback allows the operator 26 to concentrate on the judgmental task associated with bringing the plant 10 back to a nominal operating condition without requiring the operator 26 to monitor an entire control room.

FIG.1

## A SYSTEM AND METHOD FOR MONITORING PROCEDURE EXECUTION

The present invention is a system and method for monitoring procedure execution. More particularly, it is directed to a system and method that uses optically derived inputs to select a preferred course of action for performance by a person in an environment where a person is necessary in the chain of decision making and, more particularly, to a system that uses optically derived inputs to trigger a procedure selection system to select an appropriate procedure for action based on an event detected via the optically derived inputs.

A computer based system for monitoring the execution of procedures related to the operation of complex processes has been developed as described in U.S. patent Nos. 4,815,014 and 4,803,039. In this system major reliance is placed on the use of electrical or electronic signals generated by plant instrumentation to produce data used by the system to evaluate the status of the complex process and to select appropriate courses of action to recommend to the human operator in responding to off-normal conditions. Such a system of limited use in process plants which lack suitable signals from the instrumentation. These systems also suffer from difficulty in accessing electrical signals directed to plant computers that are not capable of providing digital output to other computers or are limited by protocol restraints. In addition, electrical or electronic signals isolated in protection grade or post-accident grade nuclear systems are often not readily available to such a computer based system. Computer based procedures systems also lack a diverse indication of system status since, in many cases, only one type of sensor used in any given process can generate electrical or electronic outputs.

It is the object of the invention to provide a system and method for monitoring procedure execution in the operation of a complex plant.

It is further an object of the present invention to supplement the information provided by a plant computer with information based on analysis of spatially distributed electromagnetic spectra not normally available to the plant operator.

It is also an object of the present invention to provide a procedures execution and monitoring system that can be decoupled from the sources of data needed to drive the procedure selection system.

It is still another object of the present invention to monitor the physical position of objects directly rather than to monitor the output of a sensor that reports on the physical position.

It is also an object of the present invention to monitor readouts not normally accessible to a human operator such as meters in off-site locations.

It is an additional object of the present invention to track the physical trajectories of objects and select procedures when those trajectories are off course.

It is a further object of the present invention to monitor processes susceptible to diagnosis by light.

It is another object of the present invention to monitor gaseous or liquid atmospheres of processes under control.

It is a further object of the present invention to monitor visual displays of gamma ray and X-ray spectra generated on conventional CRTs by a multichannel analyzer coupled to a gamma ray or X-ray spectrometer to evaluate the relative and absolute importances of the detectable nuclear emissions from materials, for example, the primary coolant, closely connected to the core of a nuclear reactor to identify the presence and approximate concentrations of certain nuclear isotopes which are indicative of failure of primary barriers to the release of radioactive materials and which would signal the need for, and would with the operators consent, activate procedures to block or to minimize the extent of such releases to the general environment.

The above objects can be accomplished by a system that provides optically derived inputs to a computer based procedures execution monitoring and guidance system. A spectral analyzer obtains spectra from fluid sources which are used to determine whether to trigger a procedure to correct any abberations discovered. A pyrometer monitors process temperature and triggers a procedure if the temperature is out of a normal condition. An image processing system monitors status lights, meters, valve positions and other visual information. The signature features from the image processing system are compared to reference features to determine whether a procedure should be triggered. When a procedure is triggered the operator monitors and follows the procedure to change the state of the plant, while the optical interfaces and the procedure computer monitor the changes in the plant condition calling up other procedures as needed and confirming plant response to the operator's control actions.

The present invention has the advantage of reducing or alleviating the burden on the plant operator associated with monitoring annunciator or status light and other type visual displays.

The invention has the further advantage of being able to be back-fitted to older plants with a procedures selection and monitoring system.

EP 0 349 166 A2

The invention has the additional advantage of providing a system that can be completely isolated from electrical feedback and electrical failures.

The invention will become more readily apparent from the following description of the preferred embodiment thereof, shown by way of example only, in the accompanying drawings wherein:

Figure 1 illustrates the components of the present invention;

Figure 2 is a flowchart of image capture and analysis and procedure triggering based on the analysis;

Figure 3 is a flowchart for a pyrometer analysis triggering sequence;

Figure 4 illustrates spectral processing procedure triggering; and

Figures 5-7, 8 and 9 and 10 and 11 depict procedures followed by an operator and the monitoring response of the procedure selection computer 22.

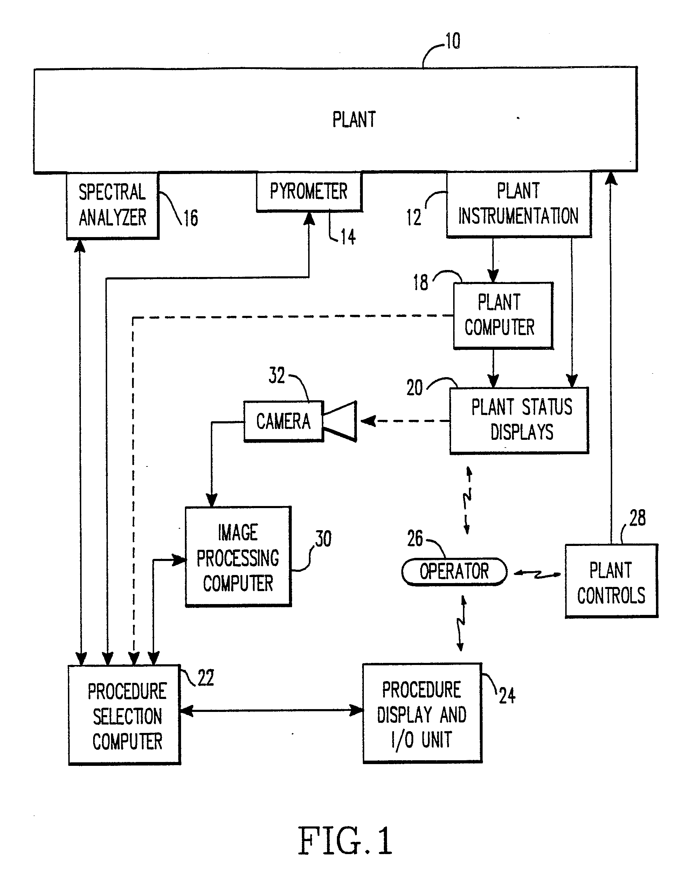

The present invention is directed to a combined image recognition, spectral analysis and computer based procedures execution monitoring and guidance system as illustrated in Figure 1. The system significantly augments the mutually complementary relationships of the human operator and the computer based monitor in managing complex processes, in that the human and the computer view common sources of information and subject that information simultaneously to knowledge-based evaluation (by the human) and rule-based evaluation (by the computer) to identify preferred courses of action. By utilizing spectral data, collected concurrently with optical image data, and subjecting those data to analysis by the computer, the system can expand the database to include not only both temperature and chemical composition information but also nuclear information to further facilitate the monitoring and guidance of the execution of procedures to rectify off-normal conditions in complex processes such as chemical manufacturing.

As illustrated in Figure 1, the plant 10 being monitored, for example, a nuclear power plant, is monitored, not only by standard plant instrumentation 12, but also by one or more pyrometers 14 and spectral analyzers 16. The plant instrumentation 12 is monitored by a plant computer 18 which controls status displays 20 such as meter positions, lit and unlit annunciator lights and CRT displays. Some of the status display information does not pass through the computer 18 making it unavailable to the computer 22 through computer 18. In the system described in U.S. applications 020,285 and 825,427, incorporated by reference herein, the plant computer 18 provides data, as illustrated by the dashed line, to a procedure selection computer 22 which selects procedures for display on a CRT type display input/output unit 24. The dashed line indicates that the data path between the plant computer 18 and procedure selection computer 22 is optional in the present invention. The user 26, utilizing the procedure display, operates plant controls 28 to change the state of the plant 10 in a desired direction. The present invention is intended to enhance the capability of the procedure selection computer 22 by providing data from the spectral analyzers 16, pyrometers 14 and from an image processing computer 30 which uses cameras 32 to monitor the status displays 20. The addition of these optical data sources enhances the procedure selection computer's ability to monitor the plant 10, select appropriate procedures and confirm that the procedures are effective. The above-mentioned patent applications describe in detail the system including the plant instrumentation 12, plant computer 18, plant status displays 20, procedures selection computer 22, procedure display 24 and plant controls 28. A suitable spectral analyzer 16 is available from Beckman Industries of Fullerton, California as a Model DU Series Spectrophotometer. The spectra produced by the spectral analyzers 16 can be compared to one of over 90,000 reference spectra available from Aldrich Chemical Company. Suitable pyrometers 14 are available from Omega Engineering of Stamford, Connecticut of which the Model OS-3000 is appropriate for measuring the temperature of distant objects. Other instruments which derive their data from the other parts of the electromagnetic spectra such as X-ray and gamma ray detectors can also be used, in other words, any device that can examine spatially dependent electromagnetic spectra and provide data useful for process diagnosis can be used. An image processing system including a suitable camera 32 and image processing computer 30 is available from Perceptics Corporation of Knoxville, Tennessee as Model 9200. The procedure selection computer 22, appropriate procedure selection software and the procedure display unit 24 are available from Westinghouse Electric Corporation of Pittsburgh, Pennsylvania as the COMPRO system.

The present invention links an optical image recognition system and/or an optical spectrum analysis system to an on-line computer based procedures execution system. The optical image recognizer scans visual displays of information relating to particular parameters such as, for example, pressure indicated on a remote meter or electrical circuit breaker positions describing aspects of the status of a complex process and converts the information received optically into feature sets (numerical or logical values of variables) that are stored in a procedure selection system database. The optical spectrum analyzer scans the electromagnetic radiations emitted by the environment of the process and/or the process itself and translates the optical spectrum information received into corresponding numerical or logical variable values in the database. A procedure selection system computer then utilizes the database to evaluate the status of

3

the process being monitored by passing selected information from the database through a chain of diagnostic logic, diagnoses causes of changes in status, selects from a set of predefined procedures the appropriate course of action to be followed in response to the current status of the process, and presents to the human user 26, via the visual display 24, the results of the evaluation, a summary of essential information used in the evaluation, the recommended course of action and a request for the user's response to the recommendation. Anything that can be seen by a human operating the complex process, as well as certain aspects of the process that cannot be seen by a human, can be "seen" by the optical components of the system and incorporated, together with information derived electrically or electronically from process instrumentation, if available, into the procedure selection system database and utilized in monitoring and guiding the execution by the human of the procedure currently appropriate.

The image recognition system can be applied to on-line optical monitoring of analog and digital meters, level indications, annunciators, circuit breaker status indicators and the like, to optical monitoring of the absolute or relative physical positions or locations of specified objects including liquid levels in tanks and to optical tracking of the trajectories of specified objects. Even information already resident in a central computer and displayed on a CRT or its equivalent may be optically monitored and subsequently utilized by the system. By using color cameras, information appearing in a particular color may be discerned and incorporated into the database. In so doing, reliance on information derived electrically or electronically, with its attendant constraints, is minimized to the point where, in some applications, virtually all of the data driving the system could be obtained optically. Thus, the optical scanner many "look" at a succession of meters at a control station for a complex process (building maintenance and environmental control, food processing, electrical power generation, chemical processing) and supply data to an on-line computer-based procedures execution monitor in exactly the same form as the data are received and utilized by a human operator executing the appropriate procedure (i.e., there would be no change in the procedure to be followed because of a change in the format or scope of data gathering). Alternatively, the optical scanner can detect relative positions of objects that it can "see" (i.e., is a linkage properly engaged?) and pass the resultant information to the system (IF the linkage is properly engaged, THEN do so and so, ELSE do whatever). The use of fiber optics to carry on-line optical information to the scanner will allow the system to monitor positional relationships in remote or awkward locations not readily or conveniently accessible to the human observer/operator. The optical scanner can detect the successive positions of a moving object, from which trajectories can be determined. The trajectories can then be supplied to the procedure selection software (which already recognizes trends) for use in determining the status of moving objects and in recommending courses of action.

An optical spectrum analyzer can be applied to the measurement of local temperature and the detection of local heat sources via the principles of the optical pyrometer and to the detection of the presence of, and measurement of the concentration of, fluids or, in specific applications, of nuclear isotopes in process areas via the principles of the optical spectrometer. By exciting solids or liquids with a suitable energy source (electric spark or laser, for example) the use of the spectrum analyzer can be extended to the measurement of chemical compositions and the detection of impurities in solids and liquids. As an alternative, or concurrently, the spectrum analyzer can be extended to the measurement of concentrations of specific nuclear isotopes. Information derived from optical spectrum analysis can be used to augment the database used by the procedure selection system in evaluating the status of complex processes such as oil refining, chemicals production, automated welding, nuclear power plant operation and the like.

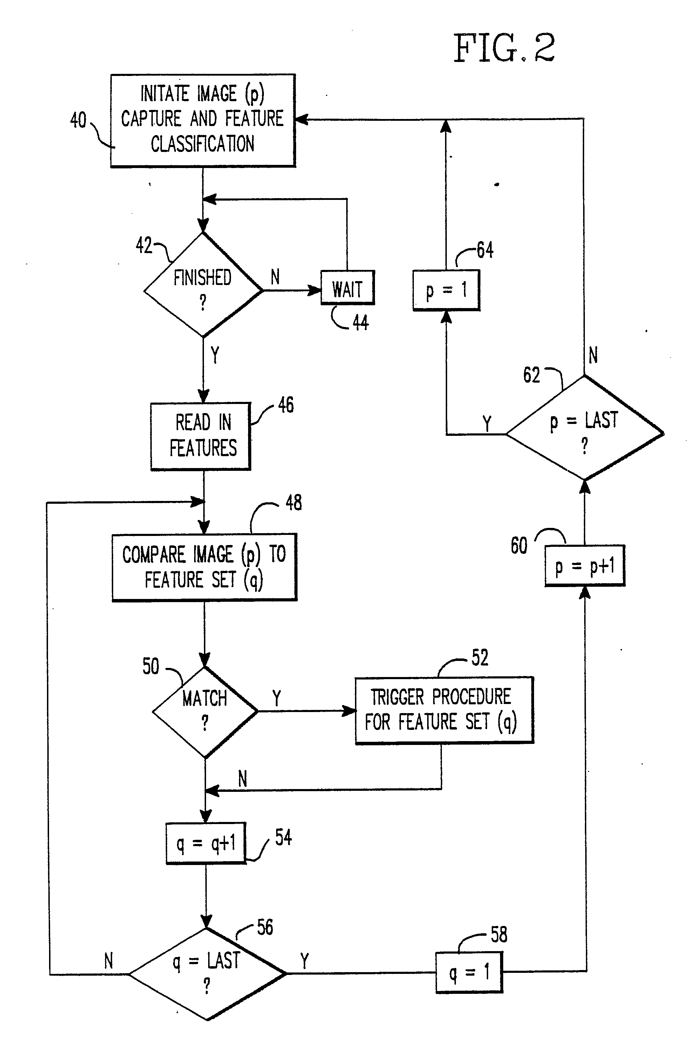

The software of the procedure selection computer 22 would be modified to periodically initiate spectral analyzer samples, pyrometer samples and image processing computer samples. Figure 2 is a flowchart of a routine which could be incorporated into the procedure selection computer software to initiate image processing computer samples and trigger an appropriate procedure based on the analysis. The program represented by Figure 2 could be initiated periodically based on a clock interrupt or automatically as the procedure selection computer cycles through its periodic data acquisition cycle. The computer 22 would initiate 40 image capture by the image processing computer 30 by transmitting an image capture command or signal over the interface to the image processing computer 30. Initiating image capture will also initiate feature classification by the image processing computer 30. Feature classification will, depending on the type of features to be classified, indicate the position of objects, whether certain segments of an image have a greater intensity (a light is on) than other segments of the image and other information related to the image. Once this image capture and classification is initiated the processor 22 must determine whether the image capture and classification process is finished 42 and if not wait 44 for image capture completion. It is also possible at this point for the procedure selection computer 22 to execute other processes and wait for an interrupt from the image processing computer 30 indicating that image capture and feature classification is complete.

4

Once the classification is complete the features are read 46 into a common memory and then compared 48 to known preexisting feature sets. This comparison could be a simple matrix type data comparison when the feature set classification indicates whether annunciator lights are on or off or a much more sophisticated expert system rule based type comparison. Many expert systems are available which will perform such rule based comparisons, however, the preferred system is PDS (Process Diagnosis System) available from Westinghouse Electric Corporation of Pittsburgh. A detailed description of the PDS system can be found in U.S. Patent 4,649,515 and an example of this system used to diagnose mechanical malfunctions can be found in U.S. Patent 4,644,479. Both U.S. Patents 4,649,515 and 4,644,479 are incorporated by reference herein. Once the comparisons are made, a determination 50 is made concerning whether a match has occurred. If a match has occurred a procedure corresponding to the matched feature set is initiated 52 by the procedure selection computer 22 and displayed on the display unit 24 for the user 26. Steps 54 and 56 in Figure 2 increment a feature set comparison pointer until the feature sets for comparison are exhausted. Steps 58-64 reset the feature set pointer, determine whether all the images have been captured and classified and reset the image capture pointer.

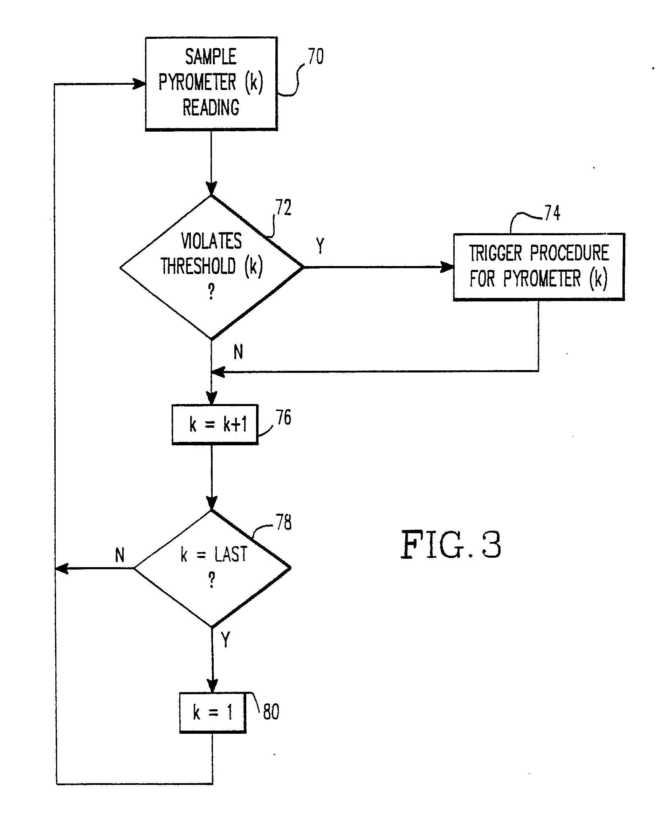

When pyrometers 14 are being used to scan the plant 10 a program represented by the flowchart of Figure 3 is executed by the procedure selection computer 22. In this process, the procedure selection computer 22 samples 70 the output of a selected pyrometer 14 through a conventional digital input/output interface and stores the sample in the common memory of the procedure selection computer 22. If the pyrometer reading violates a corresponding threshold, an appropriate procedure is triggered 74. For example, the pyrometer 14 could be monitoring the bearing temperature of a feedwater pump. It is also possible for the threshold to be several thresholds or even several ranges. Steps 76-80 increment and reset the pyrometer and threshold pointers.

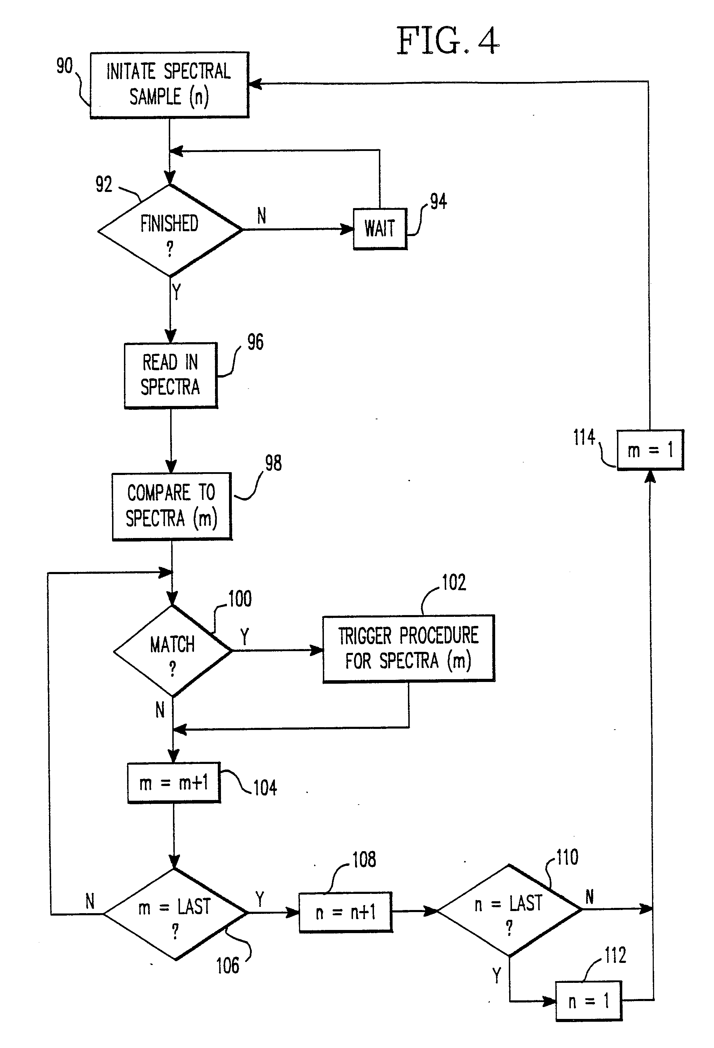

A program for initiating spectral analysis by analyzers 16 is illustrated in Figure 4. This routine is very similar to the routine illustrated in Figure 2. The computer 22 initiates 90 a spectral sample by one of the spectral analyzers 16. If the spectral analyzer 16 is capable of performing spectral analysis from several different sources the command would indicate which source to sample. If each spectral analyzer 16 could only analyze one source then the command would indicate which analyzer 16 to trigger. When the analysis process is finished 92, after a wait 94, the digital representation of the spectra is read 96 into the common memory. The spectra can then be compared 98 to a library of spectra, as previously discussed, for an exact match or could be compared using an expert system also as previously discussed. If there is a match 100, the appropriate procedure is triggered 102. Steps 104-114 control incrementing and resetting the pointers for spectra comparisons and sample initiation.

The present invention can be used as an alarm response system in an electrical generating plant, where alarm information is presented to the control room operator 26 in the form of lighted and unlighted annunciators on the annunciator panels or status displays 20. In this application the alarm information required by the procedure selection system 22 is gathered by one (or a few) television cameras 32 mounted, for example, near the ceiling of the control room and focused on the annunciator panels 20. The only wiring needed to support the information gathering system are the power and signal leads for the television cameras 32. The image processing system 30 scans the electronic images of the annunciator panels generated by the cameras 32 to determine at successive instants in time what locations on the annunciator panel are lit. Note that there is no need for the image recognizer to be able to read the text on the lighted annunciators since the information conveyed by each annunciator is directly derivable from the relative spatial location of the annunciator. With a suitably fast, but readily attainable, scan rate the sequence in which annunciators are activated in response to a transient or plant upset can be determined. The information supplied to the computer 22 consists simply of the locations and sequence of changes in state of individual annunciators on the annunciator panel of the status display 20. The computer 22 then filters this information through a predefined logic chain to diagnose the nature and cause of the upset, selects the appropriate procedure from the computer memory or a peripheral storage device, and monitors and guides the execution of that alarm response procedure by the control room operator, as described in U.S. application serial No. 825,427.

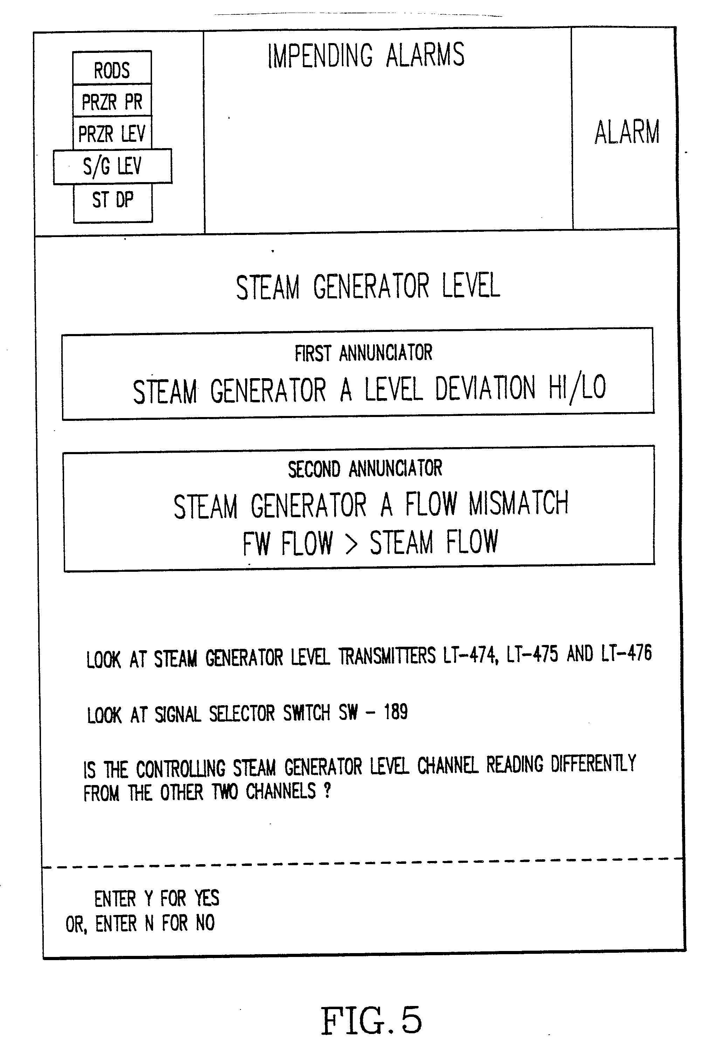

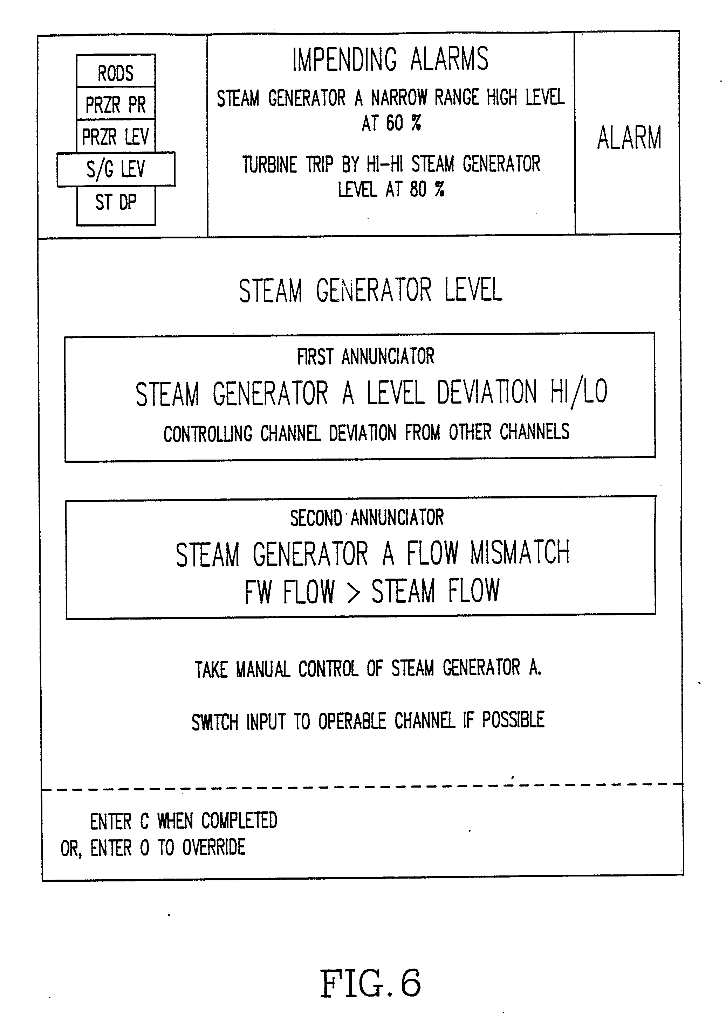

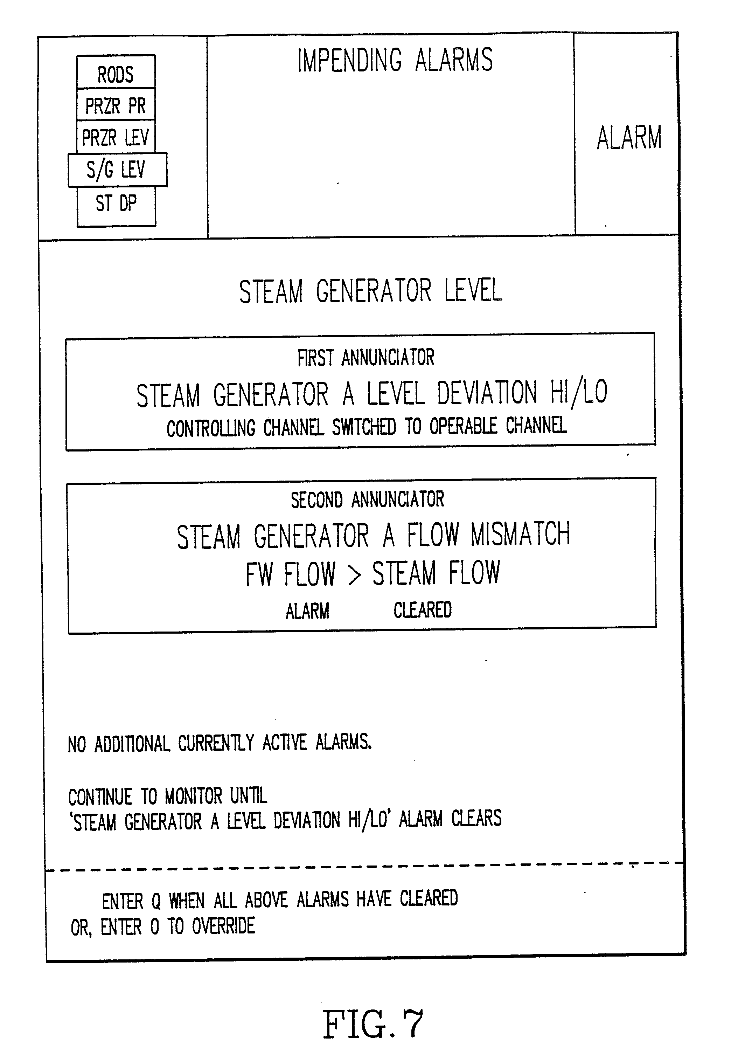

As an example of the actual functioning of the alarm response system described above, consider the following hypothesized sequence of events. The controlling channel in the steam generator A level control system fails low because of, for example, a failure of an electronic level signal transmitter. The sensor failure results in an immediate feed flow-steam flow mismatch in the steam generator A feedwater flow controller and an increase in feedwater flow. The first indication in the control room of the upset is the change in state (from dark to lighted) of the "steam generator A set point level deviation" annunciator. Very soon thereafter, the "steam generator A flow mismatch-feedwater greater than steam" annunciator switches from dark to lighted. The system detects the alarms in terms of the sequence "annunciator (m,n) now lit" and, subsequently, "annunciator (p,q) now lit". If unattended, the sensor failure could result in a high steam generator level turbine trip at 80% level. The logic of the system identifies the sequence "annunciator (m,n) now lit", "annunciator (p,q) now lit" as the signature of a steam generator A feed flow controller malfunction and selects and implements the appropriate alarm response procedure. One of the first steps in the procedure instructs the user 26 to compare the readings of the three level indicators in the suspect steam generator to determine whether the cause of the upset is a sensor failure or a controller failure. The corresponding display generated by the computer 22 system is shown in Figure 5. In this display the operator 26 is directed to the specific meters and the selector switch on the control board 28 that carry the information needed for the next step of diagnosis and is requested to answer a specific question regarding the readings of the meters and the setting of the selector switch. As soon as the operator responds to the displayed questions and inputs his answer (in this case a "Y") through a keypad or touch screen on the display monitor, the procedure selection computer 22 passes through the next active step in the logic chain and generates the display shown in Figure 6. This display contains a detailed diagnosis of the cause of the upset, a listing of impending alarms that will be activated if the situation is not rectified and an explicit recommended course of action to rectify the situation. If the operator 26 concurs with the recommended course of action, and after he has executed the instructions and finally inputs a "C" to indicate completion as requested in the second display, a third display, as shown in Figure 7, is generated by the system, utilizing updated information obtained in the most recent optical scan of the annunciator panels. Note that the "S/G LEV" bar has decreased in width, indicating that the problem has decreased in severity.

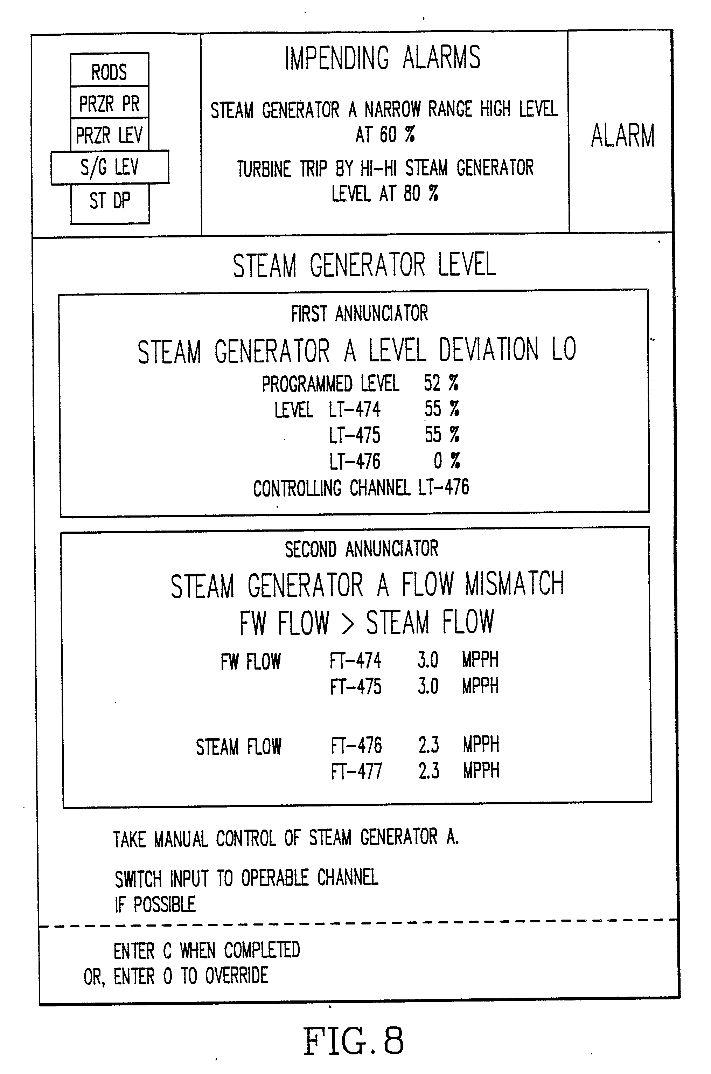

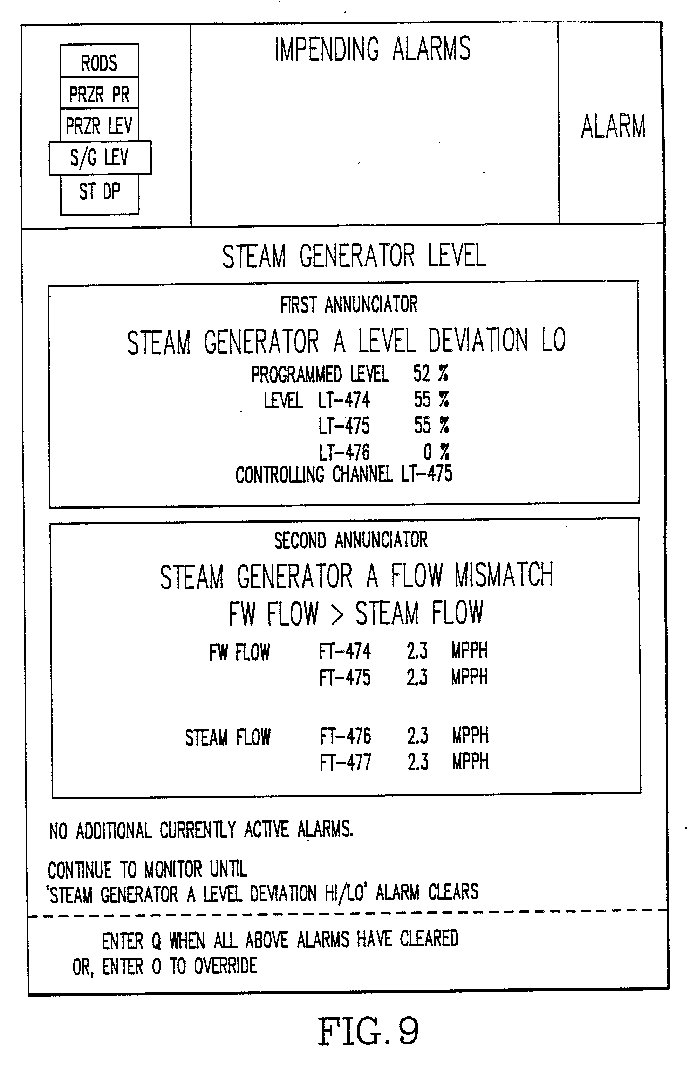

If the optical scanning system is provided with the ability to scan the control board of the plant controls 28 as well as the annunciator panels of the status displays 20, the image processing system 30 would have "read" the appropriate meters and selector switch position (i.e., determined the angular positions of the dials and the indicator at the specified locations on the board) and supplied the "readings" to the processor 22 which would convert the positional data into the needed numerical and logical data. The system 22 could then do all necessary diagnosis without requiring operator input and generate the display shown in Figure 8 instead of the successive displays shown in Figures 5 and 6. When the necessary actions have been completed, the display shown in Figure 9 would appear to confirm that the upset had been cleared and that the plant was in the process of returning to normal operating conditions.

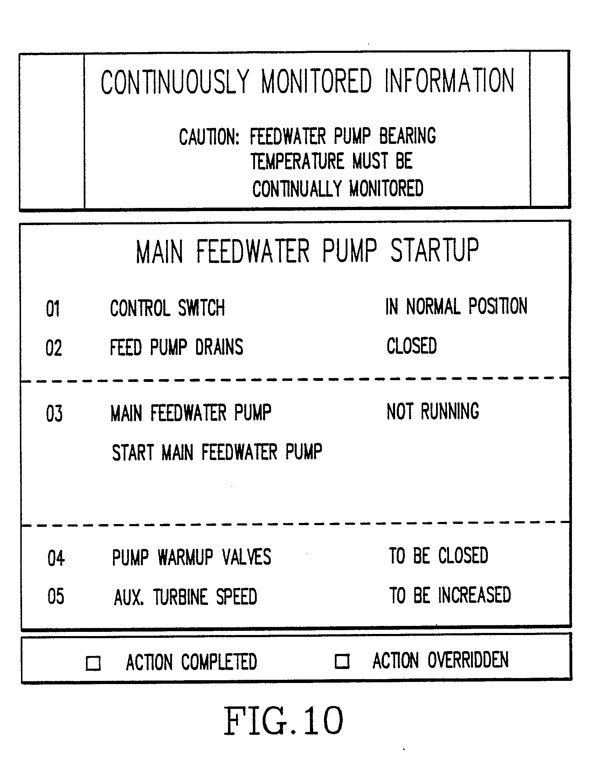

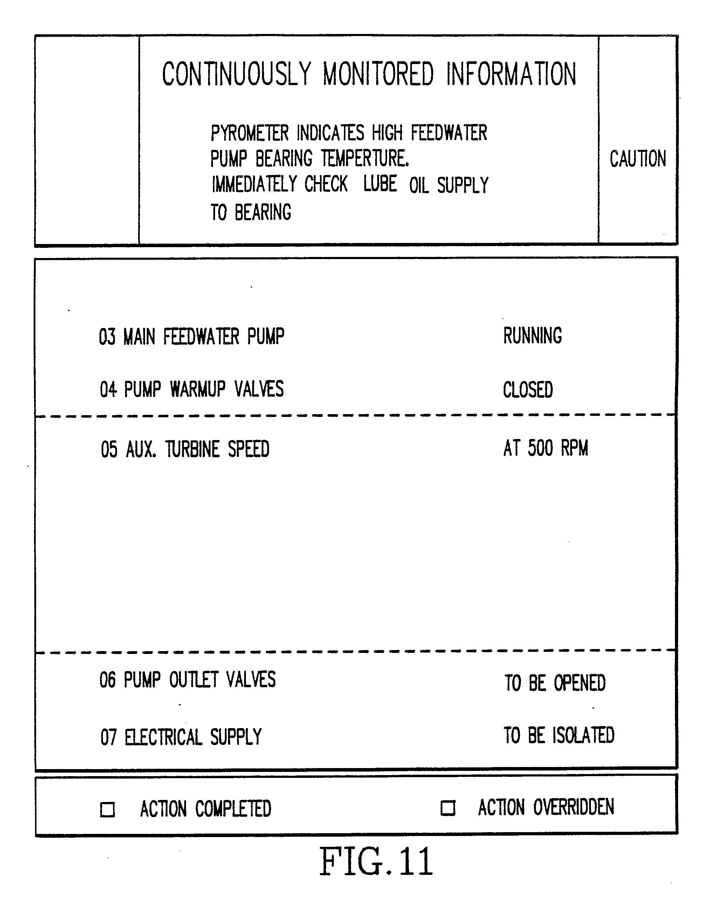

An example of the functioning of the system during a preset procedure to start a feedwater pump is illustrated in Figures 10 and 11. Figure 10 illustrates a feedwater pump start-up procedure in which the first two steps of the procedure have been performed and the third step is the action to be performed currently. At the time that the main feedwater pump is to be started, the feedwater pump bearing temperature must also be monitored. This caution message appears in the upper portion of the display screen illustrated in Figure 10. Once this caution message appears the system continuously monitors the feedwater pump bearing temperature through the pyrometer 14 as the pump start-up procedure continues. Figure 11 illustrates that the third and fourth steps for starting the feedwater pump have been completed and the fifth step is current. At this time the computer 22 has detected that the pump bearing has reached a critical temperature threshold, requiring that the oil supply to the bearing be immediately checked. This second message would appear in an emphasized color as compared to the caution, for example, the caution could be in yellow while the immediate action message could be in red on the display unit 24. After the operator 26 insures that oil is being supplied to the bearing, the temperature of the bearing detected by the pyrometer 14 would fall back to normal and the action and caution messages would disappear from the start-up procedure screens.

The many features and advantages of the invention are apparent from the detailed specification and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and accordingly, all suitable modifications and equivalents may be resorted to, falling within the scope of the invention. For example the present invention could be implemented as a combined optical image recognition system and a small computerized procedure system as a "sports practice coach" which would monitor, for example, a golfer's practice swing in terms of arm, head and leg positions and recommend adjustments in the golfer's posture and delivery to improve distance or accuracy. The present system at a chemical manufacturing installation could prevent the release of harmful chemicals because of its optical spectroscopy capabilities. The system could also monitor other meteorological parameters such as wind speed and wind direction and provide the plant operator with information concerning how far and how fast any contamination will spread.

## IDENTIFICATION OF REFERENCE NUMERALS USED IN THE DRAWINGS

| LEGEND | REF. NO. | FIGURE |
|---|---|---|
| PLANT | 10 | 1 |
| PLANT INSTRUMENTATION | 12 | 1 |
| PYROMETER | 14 | 1 |
| SPECTRAL ANALYZER | 16 | 1 |
| PLANT COMPUTER | 18 | 1 |
| PLANT STATUS DISPLAYS | 20 | 1 |
| PROCEDURE SELECTION COMPUTER | 22 | 1 |
| PROCEDURE DISPLAY AND I/O UNIT | 24 | 1 |
| OPERATOR | 26 | 1 |
| PLANT CONTROLS | 28 | 1 |
| IMAGE PROCESSING COMPUTER | 30 | 1 |
| CAMERA | 32 | 1 |
| INITIATE IMAGE (p) CAPTURE AND FEATURE CLASSIFICATION | 40 | 2 |
| FINISHED? | 42 | 2 |
| WAIT | 44 | 2 |
| READ IN FEATURES | 46 | 2 |
| COMPARE IMAGE (p) TO FEATURE SET (q) | 48 | 2 |
| MATCH? | 50 | 2 |
| TRIGGER PROCEDURE FOR FEATURE SET (q) | 52 | 2 |
| $q = q+1$ | 54 | 2 |
| $q =$ LAST? | 56 | 2 |
| $q = 1$ | 58 | 2 |
| $p = p+1$ | 60 | 2 |
| $p =$ LAST? | 62 | 2 |
| $p = 1$ | 64 | 2 |
| SAMPLE PYROMETER (k) READING | 70 | 3 |
| VIOLATES THRESHOLD (k)? | 72 | 3 |
| TRIGGER PROCEDURE FOR PYROMETER (k) | 74 | 3 |
| $k = k+1$ | 76 | 3 |
| $k =$ LAST? | 78 | 3 |
| $k = 1$ | 80 | 3 |
| INITIATE SPECTRAL SAMPLE (n) | 90 | 4 |
| FINISHED? | 92 | 4 |

7

## IDENTIFICATION OF REFERENCE NUMERALS USED IN THE DRAWINGS

| LEGEND | REF. NO. | FIGURE |
|---|---|---|
| WAIT | 94 | 4 |
| READ IN SPECTRA | 96 | 4 |
| COMPARE TO SPECTRA (m) | 98 | 4 |
| MATCH? | 100 | 4 |
| TRIGGER PROCEDURE FOR SPECTRA (m) | 102 | 4 |
| m = m+1 | 104 | 4 |
| m = LAST? | 106 | 4 |
| n = n+1 | 108 | 4 |
| n = LAST? | 110 | 4 |
| n = 1 | 112 | 4 |
| m = 1 | 114 | 4 |

**Claims**

1. A system for monitoring procedure execution comprising:
procedure display and monitoring means (22 and 24) for selecting a procedure responsive to diagnostic information and monitoring execution of the procedure,
characterized in having spectrum information means (14, 16, 30 and 32) for providing spectrum diagnostic information responsive to observation of a device (10).

2. A system as recited in claim 1, wherein said information means (14, 16, 30 and 32) is further characterized in comprising a pyrometer (14).

3. A system as recited in claim 1, wherein said information means (14, 16, 30 and 32) is further characterized in comprising a spectrophotometer (16).

4. A system as recited in claim 1, wherein said information means (14, 16, 30 and 32) is further characterized in comprising an image processing system (30 and 32) processing images of display devices (20) viewable by an operator (26).

5. A system as recited in claim 1, wherein said procedure display and monitoring means (22 and 24) is further characterized to include means (22) for comparing the optical information to reference information and triggering a procedure corresponding to matched reference information.

6. A system as recited in claim 1, further characterized in that an operator (26) changes a plant condition responsive to the procedure and said procedure display and monitoring (22 and 24) means changes the procedure responsive to visual detection of a change in the diagnostic information caused by changes in the plant condition.

7. A procedures execution monitoring system for a power plant (10), comprising:
a pyrometer (14) determining a temperature of plant components;
a spectrophotometer (16) analyzing fluids in the plant (10) to produce a fluid spectrum;
an image processing system (30 and 32) including a camera (32) scanning a visual indicator of plant operation;
a procedure selection computer (22), characterized in being connected to said pyrometer (14), said spectrophotometer (16) and said image processing system (30 and 32), sampling the temperature, retrieving the spectrum and retrieving the indicator, comparing the temperature, spectrum and indicators to respective reference temperature, spectrum and indicator, and producing a respective procedure when a match occurs; and
a display (24) connected to said computer (22) and displaying the procedure.

8. A method of procedure selection for a power plant (10), characterized by the steps of:

(a) scanning (40, 70 or 90) the plant (10) to produce electromagnetic spectral information;

(b) comparing (48, 72 or 98) the spectral information to reference information;

(c) selecting (52, 74 or 102) a corresponding procedure when the spectral information and reference information match; and

(d) displaying the procedure to an operator (26).

9. A method as recited in claim 7, further characterized by the steps of:

(e) allowing an operator (26) to change a condition of the plant (10) changing the spectral information;

(f) changing the procedure based on the changed spectral information; and

(g) displaying the changed procedure to the operator (26).

FIG.1

FIG.2

- 40 — INITATE IMAGE (p) CAPTURE AND FEATURE CLASSIFICATION
- 42 — FINISHED ?
- N → WAIT — 44
- Y
- 46 — READ IN FEATURES
- 48 — COMPARE IMAGE (p) TO FEATURE SET (q)
- 50 — MATCH ?
- Y → TRIGGER PROCEDURE FOR FEATURE SET (q) — 52
- N
- 54 — q = q+1
- 56 — q = LAST ?
- N
- Y → q = 1 — 58
- 60 — p = p+1
- 62 — p = LAST ?
- N
- Y → p = 1 — 64

FIG.3

# FIG. 4

| RODS | IMPENDING ALARMS | |
|---|---|---|
| PRZR PR | | ALARM |
| PRZR LEV | | |
| S/G LEV | | |
| ST DP | | |

## STEAM GENERATOR LEVEL

FIRST ANNUNCIATOR
STEAM GENERATOR A LEVEL DEVIATION HI/LO

SECOND ANNUNCIATOR
STEAM GENERATOR A FLOW MISMATCH
FW FLOW > STEAM FLOW

LOOK AT STEAM GENERATOR LEVEL TRANSMITTERS LT–474, LT–475 AND LT–476

LOOK AT SIGNAL SELECTOR SWITCH SW – 189

IS THE CONTROLLING STEAM GENERATOR LEVEL CHANNEL READING DIFFERENTLY FROM THE OTHER TWO CHANNELS ?

ENTER Y FOR YES
OR, ENTER N FOR NO

## FIG.5

| RODS |
| :---: |
| PRZR PR |
| PRZR LEV |
| S/G LEV |
| ST DP |

## IMPENDING ALARMS

STEAM GENERATOR A NARROW RANGE HIGH LEVEL
AT 60 %

TURBINE TRIP BY HI-HI STEAM GENERATOR
LEVEL AT 80 %

ALARM

## STEAM GENERATOR LEVEL

FIRST ANNUNCIATOR
### STEAM GENERATOR A LEVEL DEVIATION HI/LO
CONTROLLING CHANNEL DEVIATION FROM OTHER CHANNELS

SECOND ANNUNCIATOR
### STEAM GENERATOR A FLOW MISMATCH
### FW FLOW > STEAM FLOW

TAKE MANUAL CONTROL OF STEAM GENERATOR A.

SWITCH INPUT TO OPERABLE CHANNEL IF POSSIBLE

ENTER C WHEN COMPLETED
OR, ENTER O TO OVERRIDE

## FIG.6

| RODS |
| PRZR PR |
| PRZR LEV |
| S/G LEV |
| ST DP |

IMPENDING ALARMS

ALARM

## STEAM GENERATOR LEVEL

FIRST ANNUNCIATOR

### STEAM GENERATOR A LEVEL DEVIATION HI/LO
CONTROLLING CHANNEL SWITCHED TO OPERABLE CHANNEL

SECOND ANNUNCIATOR

### STEAM GENERATOR A FLOW MISMATCH
### FW FLOW > STEAM FLOW
ALARM      CLEARED

NO ADDITIONAL CURRENTLY ACTIVE ALARMS.

CONTINUE TO MONITOR UNTIL
'STEAM GENERATOR A LEVEL DEVIATION HI/LO' ALARM CLEARS

- - - - - - - - - - - - - - - - - - - - - - - - - - - - - - - - - -

ENTER Q WHEN ALL ABOVE ALARMS HAVE CLEARED
OR, ENTER O TO OVERRIDE

# FIG. 7

| RODS | IMPENDING ALARMS | |
|---|---|---|
| PRZR PR | | |
| PRZR LEV | STEAM GENERATOR A NARROW RANGE HIGH LEVEL AT 60 % | ALARM |
| S/G LEV | TURBINE TRIP BY HI–HI STEAM GENERATOR LEVEL AT 80 % | |
| ST DP | | |

STEAM GENERATOR LEVEL

FIRST ANNUNCIATOR

STEAM GENERATOR A LEVEL DEVIATION LO

PROGRAMMED LEVEL    52 %
LEVEL  LT-474        55 %
       LT-475        55 %
       LT-476         0 %
CONTROLLING CHANNEL LT-476

SECOND ANNUNCIATOR

STEAM GENERATOR A FLOW MISMATCH

FW FLOW > STEAM FLOW

FW FLOW      FT-474    3.0    MPPH
             FT-475    3.0    MPPH

STEAM FLOW   FT-476    2.3    MPPH
             FT-477    2.3    MPPH

TAKE MANUAL CONTROL OF STEAM GENERATOR A.

SWITCH INPUT TO OPERABLE CHANNEL
IF POSSIBLE

ENTER C WHEN COMPLETED
OR, ENTER O TO OVERRIDE

FIG.8

| RODS | IMPENDING ALARMS | |
|---|---|---|
| PRZR PR | | |
| PRZR LEV | | ALARM |
| S/G LEV | | |
| ST DP | | |

## STEAM GENERATOR LEVEL

### FIRST ANNUNCIATOR

## STEAM GENERATOR A LEVEL DEVIATION LO

PROGRAMMED LEVEL    52 %

LEVEL   LT-474     55 %

LT-475     55 %

LT-476     0 %

CONTROLLING CHANNEL LT-475

### SECOND ANNUNCIATOR

## STEAM GENERATOR A FLOW MISMATCH
## FW FLOW > STEAM FLOW

FW FLOW     FT-474    2.3    MPPH

FT-475    2.3    MPPH

STEAM FLOW     FT-476    2.3    MPPH

FT-477    2.3    MPPH

NO ADDITIONAL CURRENTLY ACTIVE ALARMS.

CONTINUE TO MONITOR UNTIL
'STEAM GENERATOR A LEVEL DEVIATION HI/LO' ALARM CLEARS

- - - - - - - - - - - - - - - - - - - - - - - - - - - - - - - - -

ENTER Q WHEN ALL ABOVE ALARMS HAVE CLEARED
OR, ENTER O TO OVERRIDE

## FIG.9

| CONTINUOUSLY MONITORED INFORMATION |
|---|
| CAUTION: FEEDWATER PUMP BEARING<br>TEMPERATURE MUST BE<br>CONTINUALLY MONITORED |

## MAIN FEEDWATER PUMP STARTUP

| 01 | CONTROL SWITCH | IN NORMAL POSITION |
|---|---|---|
| 02 | FEED PUMP DRAINS | CLOSED |
| 03 | MAIN FEEDWATER PUMP<br>START MAIN FEEDWATER PUMP | NOT RUNNING |
| 04 | PUMP WARMUP VALVES | TO BE CLOSED |
| 05 | AUX. TURBINE SPEED | TO BE INCREASED |

☐ ACTION COMPLETED     ☐ ACTION OVERRIDDEN

FIG. 10

EP 0 349 166 A2

| CONTINUOUSLY MONITORED INFORMATION | | CAUTION |
|---|---|---|
| PYROMETER INDICATES HIGH FEEDWATER PUMP BEARING TEMPERTURE. IMMEDIATELY CHECK LUBE OIL SUPPLY TO BEARING | | |

| 03 MAIN FEEDWATER PUMP | RUNNING |
|---|---|
| 04 PUMP WARMUP VALVES | CLOSED |
| 05 AUX. TURBINE SPEED | AT 500 RPM |
| 06 PUMP OUTLET VALVES | TO BE OPENED |
| 07 ELECTRICAL SUPPLY | TO BE ISOLATED |

☐ ACTION COMPLETED     ☐ ACTION OVERRIDDEN

FIG.11